# EUROPÄISCHE PATENTSCHRIFT

(11) **EP 3 807 537 B1**
(45) Veröffentlichungstag und Bekanntmachung des Hinweises auf die Patenterteilung: **20.12.2023**
(21) Anmeldenummer: 19836455.6
(22) Anmeldetag: 29.11.2019
(51) Int. Cl.: F04B 19/00, F04B 43/04

(54) **VERFAHREN ZUR ERHÖHUNG DER DOSIERPRÄZISION VON MIKROFLUIDISCHEN PUMPEN ODER VENTILEN SOWIE SCHWEISSVORRICHTUNG UND SPANNVORRICHTUNG ZUR DURCHFÜHRUNG DES VERFAHRENS**
METHOD FOR IMPROVING THE DOSING PRECISION OF MICROFLUIDIC PUMPS OR VALVES AND WELDING DEVICE AND CLAMPING DEVICE FOR CARRYING OUT THE METHOD
PROCÉDÉ POUR AUGMENTER LA PRÉCISION DE DOSAGE DES POMPES OU SOUPAPES MICROFLUIDIQUES ET DISPOSITIF DE SOUDURE ET DISPOSITIF DE SERRAGE EN OEUVRE DE CE PROCÉDÉ

(30) Priorität: 19.12.2018 DE 102018009860
(43) Veröffentlichungstag der Anmeldung: 21.04.2021
(73) Patentinhaber: M2p-labs GmbH, 52499 Baesweiler (DE)
(72) Erfinder: FRISCHE, Niklas, 52499 Baesweiler (DE); KREMERS, Alexander, 52499 Baesweiler (DE); HILDENBRAND, Karlheinz, 88696 Owingen (DE); PETRY, Christoph, 41468 Neuss (DE)
(74) Vertreter: Castell, Klaus
(86) Internationale Anmeldenummer: PCT/DE2019/000306
(87) Internationale Veröffentlichungsnummer: WO 2020/125829

(56) Entgegenhaltungen:
- EP-A2- 2 796 200
- WO-A1-2015/051776
- WO-A2-01/94920
- WO-A2-2007/028185
- DE-A1-102013 013 415

## Beschreibung

Die technische Produktion von Wirkstoffen, Vitaminen, Peptiden oder Proteinen durch gentechnisch veränderte Mikroorganismen hat in den letzten drei Jahrzehnten enorm an wirtschaftlicher Bedeutung gewonnen. Bei der industriellen Produktion dieser Substanzen werden die produzierenden Zellsysteme in einem Bioreaktor, der viele Kubikmeter Volumen fassen kann, kultiviert. Dabei wird über die Regelung des pH-Werts, der Konzentration der Nährstoffe, des Sauerstoffgehalts der Lösung und einiger anderer für das Wachstum und den Stoffwechsel der Zellen relevanter Parameter dafür gesorgt, dass die Zellen optimal produzieren können.

Generell erfordert eine Regelung vitaler Parameter in einer Mikroorganismen- oder Zellkultur, dass diese Parameter mit einem geeigneten Messverfahren in Echtzeit oder zumindest zeitnah gemessen werden. Eine Abweichung eines Vitalparameters vom Sollwert erfordert dann eine entsprechende Intervention. Diese kann vollautomatisch erfolgen oder manuell durch den Operator. In beiden Fällen wird versucht, durch Zudosieren eines geeigneten Agens, den entsprechenden Vitalparameter auf seinen Sollwert zu regeln. So wird ein im Lauf einer Kultivierung von Zellen absinkender pH-Wert normalerweise durch Zudosieren einer adäquaten Menge einer geeigneten Base korrigiert; ein ansteigender pH-Wert entsprechend durch Zugabe einer Säure. Die Energieversorgung der Mikroorgansimen oder Zellen wird im Allgemeinen durch gesteuerte Zugabe einer geeigneten Kohlenstoffquelle, oftmals Glukoselösung, realisiert. Dabei ist es oftmals entscheidend, dass die notwendigen Agenzien in exakt bemessener Menge zugegeben werden. Überschuss oder Unterschuss eines Agens kann die Produktqualität des biotechnologisch produzierten Stoffs beeinträchtigen, die Produktion gänzlich zum Erliegen bringen oder zumindest die Raum-Zeit-Ausbeute beeinträchtigen

Im technischen Maßstab - also bei einer Kultivierung von Zellen in mehreren hundert oder sogar vielen tausend Litern Kulturflüssigkeit - ist das Zudosieren von Agenzien zum Adjustieren der Kulturbedingungen, abgesehen von der Tatsache dass die Zugabe meist vollkommen steril zu erfolgen hat, kein besonderes Problem: Die benötigte Menge an Agens liegt im Bereich von einigen Millilitern bis Litern, so dass es eine Vielzahl von Techniken gibt, die es erlauben, die Agenzien mit hoher Genauigkeit und Präzision abzumessen und zu zudosieren.

Die oben beschriebene Methode, die Kulturbedingungen für eine biotechnologischen Produktion erstmals zu etablieren, erfordert während der Produktentwicklung, in der die Vitalparameter, die während der Produktion Anwendung finden, zunächst ermittelt werden müssen, jedoch meist andere Techniken. Während dieser Optimierung werden zunächst potentiell geeignete Organismen, die durch zufällige Mutagenese oder gezielte Genmanipulation erzeugt worden sind, gescreent. Die vielversprechendsten Organismen werden selektioniert und im nächsten Schritt die Kulturbedingungen zunächst in gröberen Schritten, dann zunehmend kleinschrittiger variiert. Es ist für jedermann offensichtlich, dass es nicht sinnvoll ist, solche Optimierungen im Maßstab von tausenden, hunderten oder auch nur wenigen Litern durchzuführen. Die Kosten für jedes einzelne Optimierungsexperiment sind im Wesentlichen proportional zu seinem Maßstab. Die Kosten für Agenzien, Geräte und Platzbedarf im Labor korrelieren stark mit dem Kulturvolumen. Auch die Arbeitszeit, die ein Operator einer individuellen Kultur widmen muss, ist in erheblichem Maße von ihrem Volumen abhängig.

Von daher ist es nicht verwunderlich, dass Wissenschaftler, die eine Zell- oder Mikroorganismen-Kultur und biotechnische Produktion optimieren, was oft hunderte oder tausende verschiedener Experimente erfordert, bestrebt sind, diese möglichst parallelisiert und in möglichst kleinem Maßstab, also kleinem Volumen, durchzuführen.

Aus diesem Grund finden parallelisierte Mikrobioreaktoren in der Biotechnologie immer häufiger Anwendung. Oftmals werden die Reaktorgefäße in Form einer Mikrotiterplatte arrangiert, was entsprechend zu einem Array an klein- oder kleinstvolumigen Reaktoren führt. So ist es möglich, in nur einer Mikrotiterplatte, oftmals im Standardformat von 128 x 85 mm 6, 24, 48, 96, 384 oder gar 1536 Kultivierungen gleichzeitig ablaufen zu lassen. In diesem Mikrovolumen optimierte Reaktionsbedingungen lassen sich oftmals mit relativ geringen Adaptationen in ein makroskopisches Format übertragen. Durch die Variation der Anzahl der Reaktoren auf einer Mikrotiterplatte variieren die Arbeitsvolumina entsprechend erheblich: Während schon bei Maßstäben unter 10 ml zumeist von Mikroreaktoren gesprochen wird, erlaubt eine weitere Reduzierung des Volumen auf unter 1 mL, unter 500 µL, unter 100 µL oder gar unter 10 µL gerade bei der Optimierung von Kulturbedingungen mit mehreren Stellgrößen durch die mögliche Parallelisierung der Experimente erhebliche Zeit- und Kosteneinsparungen. Das Zudosieren von Agenzien, hier oft Stellmittel genannt, die notwendig sind, um die Kulturbedingungen im Sollbereich zu halten, stellt dann jedoch oftmals eine große Herausforderung dar. Bei Reaktoren mit Volumina unterhalb von 1 mL müssen die Stellmittel zumeist in µL- oder gar nL-Volumina langsam zudosiert werden, ohne dass bei den Anforderungen hinsichtlich Genauigkeit und Wiederholbarkeit der Experimente im Vergleich zu den Bedingungen in großen Reaktoren wesentliche Abstriche gemacht werden können.

Viele Hersteller greifen bei der Entwicklung von Technologien für die Zugabe von Stellmitteln im mittleren Maßstab daher gerne auf bewährte Techniken wie Spritzen- oder Schlauchpumpen zurück. Diese Techniken erlauben zumindest im µL-Maßstab, mit gewissen Einschränkungen sogar im nL-Maßstab, eine stabile und reproduzierbare Förderleistung. Die Anwendung dieser Pumpen in der Mikrobioverfahrenstechnik ist jedoch mit dem Nachteil verbunden, dass Sterilbedingungen im Allgemeinen nur gewährleistet werden können, wenn Schläuche und Spritzen vor Gebrauch gründlich gereinigt und sterilisiert oder als entsprechend vorbereitete Einwegartikel verwendet werden. Der Aufbau nur eines Experiments ist dann mit erheblichem Kosten- und Zeitaufwand verbunden, insbesondere wenn der Parallelisierungsgrad mehr als ein oder zwei Duzend simultane Kulturen umfasst. Andere Hersteller von Mikrobioreaktoren nutzen hochpräzise Dosierventile (Applikon), um Flüssigkeiten in die Reaktionskammern zu fördern. Auch hierbei kommen die Flüssigkeiten mit Teilen der Ventile in Kontakt und diese müssen daher vor Gebrauch gereinigt und sterilisiert werden. Zudem muss eine solche Dosierung durch den Deckel der Mikrotiterplatte geschehen und somit potentiell die Sterilbarriere durchbrochen werden. Ein kostengünstiges und einfach zu bedienender Einwegsystem mit Zugabe durch den Boden einer Mikrotiterplatte wäre daher für den Anwender von Mikrobioreaktoren von erheblichem Nutzen,

Ein interessantes Verfahren, um hochparallel Stellmittel in Mikrobioreaktoren zu fördern, wird im Europäischen Schutzrecht EP3055065 beschrieben: Mit Hilfe einer Mikrofluidik, bestehend aus Kanälen von ca. 100 µm Durchmesser und in diese Kanäle integrierten Pumpen und Ventilen können Stellmittel aus auf einer Mikrotiterplatte integrierten Reservoiren durch den Boden einer Mikrotiterplatte in die Mikroreaktoren gepumpt werden. Der Einsatz von mikrofluidischen Ventilen und Pumpen verspricht eine gute Integrierbarkeit vieler einzelner Mikrobioreaktoren in ein Mikrobioreaktorsystem, wodurch viele parallele Versuche innerhalb eines verhältnismäßig kleinen Bauraums möglich werden. Durch eine Vielzahl von Ventilen, Pumpen und Kanälen können so bis zu 32 Reaktionskammern mit jeweils zwei Dosierpfaden gleichzeitig angesteuert werden und somit Prozesse mit hohem Durchsatz durchgeführt werden. Auch eine höhere Anzahl von bis zu ca. 2000 Reaktionskammern oder mehr ist mit dieser Technik realisierbar.

Die Funktion der in den Chip integrierten Pumpen und Ventile beruht darauf, dass meist kreisförmige Tröge, die mit den Kanälen verbunden sind mit einer flexiblen Folie oder Membran verschlossen werden. Mit Hilfe von Luftdruck, kann die Folie in die Tröge eingepresst werden, was dazu führt, dass der Kanal unterbrochen wird und Flüssigkeit aus dem Trog herausgepresst wird. Je nach Anordnung dieser Tröge/Ventile zueinander und je nach Reihenfolge und Dauer mit der die Folie in diese Tröge/Ventile eingepresst wird, lässt sich Flüssigkeit mit prinzipiell definierten Flussraten in eine festgelegte Richtung pumpen.

Solche mikrofluidischen Ventile und Pumpen (Membranpumpen) werden im Life-Science Bereich mittlerweile regelmäßig eingesetzt, da diese mittels Druckluft einfach und relativ kostengünstig betätigt werden können. Schaltet man zwischen zwei Ventile eine Pumpkammer, kann man durch eine bestimmte Schaltabfolge eine peristaltische Bewegung der Flüssigkeit erreichen, wodurch eine quasi kontinuierliche Bewegung der Flüssigkeit möglich wird, ohne dass die physikalischen Eigenschaften der Flüssigkeiten einen deutlichen Einfluss auf die Pumpleistung haben. Erst bei geringen Flussraten wird die Förderung der Pumpen sichtbar diskontinuierlich, da das Volumen der Pumpkammer, das kleinste diskrete Flüssigkeitsvolumen ist, das in einer Zeiteinheit bewegt werden kann. Die Herausforderung dieser Technik liegt in der Deckelung des Ventiltrogs mit einer flexiblen Membran. Hier finden die verschiedensten Methoden Anwendung, die prinzipiell in indirekte (adhäsives Verbinden oder Klemmen) und direkte Verbindungstechniken (Kleben, lösungsmittelvermitteltes Bonding, thermisches Verschweißen oder Ultraschallschweißen) eingeteilt werden können (Tsao et al. 2008).

Dokument EP 2 796 200 A2 offenbart eine mikrofluidische Pumpe, die eine flexible Membran und einen Ventilkörper mit mindestens einem Ventiltrog aufweist, wobei bei der Herstellung die dem Ventiltrog zugewandte Oberfläche der Membran mit einem Laserstrahl erwärmt wird. Die gängigste Methode zur Deckelung des Ventiltrogs ist die Thermofusion bzw. das thermische Verschweißen der Membran mit dem Grundkörper durch erhöhte Temperatur oder Ultraschall und Druck. Diese Methode benötigt keine weiteren Zusatzstoffe, die austreten und schädlich für die Zellen sein könnten. Vor der Klemmung hat sie den Vorteil, ohne mechanische Hilfsmittel auszukommen. Beim thermischen Verschweißen werden die Substrate nahe an ihre Glasübergangstemperatur gebracht und mit Hilfe eines Druckstempels zusammengepresst. Das Zusammenspiel von Druck und Temperatur generiert einen ausreichenden Polymerfluss um eine Interdiffusion zwischen Polymerketten der einzelnen Schichten herzustellen, womit eine starke Verbindung entsteht, die der kohäsiven Verbindungsstärke des Grundmaterials ähnlich ist. Eine große Herausforderung bei der Thermofusion liegt jedoch in der Reduzierung der Strukturverformung: Um Ventile bzw. Pumpkammern präzise mit einer flexiblen Membran zu deckeln, müssen die Ventile definierte Kanten aufweisen, an die die Membran gefügt wird. Dies führt dazu, dass diese Ventile oder Pumpkammern verhältnismäßig tief sein müssen, um eine signifikante Strukturverformung durch das Erhitzen und Aufpressen der Folie zu vermeiden. Um geringe Fördervolumina zu ermöglichen, greift man beim Design der Geometrie der Ventile daher meist auf kleine Querschnittsflächen mit verhältnismäßig hoher Tiefe und dadurch hohem Totvolumen zurück, wodurch das Abdichten der Ventile erschwert wird. Um eine niedrige Leckrate mit geringem Totvolumen zu erreichen, wäre es dagegen hilfreich, ein großes Verhältnis von Breite zu Tiefe des Ventils zu erreichen: Je breiter das Ventil, desto weniger pneumatischer Druck wird benötigt, um die Deckelfolie beim Betrieb in das Ventil zu pressen und das Ventil so abzudichten bzw. auszufüllen bzw., im Fall einer Pumpe, das gesamte Volumen zu fördern. Bedauerlicherweise ist es erheblich schwieriger, die Deckelfolie auf diesen breiten und flachen Ventiltrögen thermisch aufzuschweißen als bei den weiter oben beschriebenen tiefen Trögen. Die Membranfolie kann sich durch ihre Flexibilität und ihr Eigengewicht in die Ventile legen und dort ebenfalls verkleben. Daraus resultieren ungleichmäßig gedeckelte Ventile und Pumpkammern. Das Ergebnis sind Pumpventile mit hoher Varianz des Volumens der Pumpkammer. Dies hat negative Auswirkungen auf die Reproduzierbarkeit des Pumpvorgangs von Pumpe zu Pumpe: Da das Fördervolumen der Pumpe direkt proportional zum Kammervolumen ist, bedeutet ein variables Kammervolumen unmittelbar eine geringere Reproduzierbarkeit des Dosiervorgangs bzw. eine geringere Förderpräzision von Pumpe zu Pumpe

Um eine flexible Folie auf flache Ventile (großer Durchmesser, geringe Tiefe) thermisch zu verschweißen, hat es sich deswegen als hilfreich erwiesen, den durch erhöhte Temperatur und Druck charakterisierten Schweißvorgang mit Hilfe eines beheizten Stempels durchzuführen, der am Ort der Ventil- und Pumpkammerkavitäten Aussparungen besitzt. Dadurch wird der Wärmeübertrag in den Ventiltrog reduziert, was dazu führt, dass flexible Folien im Ventiltrog weniger leicht verkleben und der Rand der Ventiltröge weniger leicht deformiert werden. In der Praxis zeigt sich jedoch, dass der Wärmeübertrag in die Pumpkammer nicht immer so wesentlich vermindert werden kann, dass das Ankleben der flexiblen Folie in der Kammer gänzlich unterbleibt. Zum anderen erfordern Ventilaussparungen im Fügestempel, dass der Stempel gegenüber den Ventiltrögen äußerst präzise ausgerichtet werden muss. Unabhängig von Problemen, die mit der mechanischen Justage zweier Bauteile gegeneinander generell verbunden sind, kann bereits eine geringfügig ungleichmäßige Erwärmung des Fügestempels eine in verschiedene Richtungen anisotrope Ausdehnung zur Folge haben. Die Konsequenz ist, dass die Ventiltröge in einem Mikrofluidikchip und die Aussparungen im Fügestempel, selbst bei perfekter mechanischer Ausrichtung, nicht immer konzentrisch zu liegen kommen. Ähnlich wie bei Ventilen mit teilweise angeklebter Deckelmembran kann dies ebenfalls zu einer erheblichen Varianz des Volumens der Pumpkammer führen. Auch hier zeigt die Pumpleistung im Ergebnis eine erhebliche Varianz von Pumpe zu Pumpe.

Auch wenn mikrofluidische Pumpensysteme mit flexibler Deckelfolie aus den oben genannten Gründen (hervorragende Parallelisierbarkeit, leicht Sterilisierbarkeit, geringe Kosten, einfacher Einsatz in einem Einwegartikel/Disposable) für den Einsatz in Mikrobioreaktoren prinzipiell gut geeignet sind, führt die nach dem derzeitigen Stand der Technik hohe Varianz der Förderleistung verschiedener an sich identisch konstruierter Pumpen dazu, dass ihr Einsatz für das Screening von Organismen bzw. die Optimierung von Bedingungen in Zellkulturen nicht sinnvoll möglich ist, wenn das System empfindlich auf geringe Änderungen der Kulturbedingungen reagiert. Für diese Systeme sind präziser arbeitende Dosiersysteme notwendig.

Die Erfindung betrifft ein Verfahren zur Erhöhung der Dosierpräzision von mikrofluidischen Pumpen und/oder Ventilen basierend auf einer flexiblen Deckfolie, die als Membran bezeichnet wird, und einem Ventiltrog gemäß Patentanspruch 1.

Vorteilhafte Weiterbildungen sind Gegenstand der Unteransprüche.

Vorteilhaft ist es daher, wenn die Membran mit dem Ventilkörper mittels des Laserstrahls verschweißt wird. Außerdem kann die Membran oder der Ventilkörper mit einem hitzeaktivierbaren Klebstoff versehen sein. Sinnvoll ist es, wenn mit dem Strahl eine Befestigung der Membran am Ventilkörper als Naht entlang des Randes des Ventiltroges hergestellt wird. Die dem Ventiltrog zugewandte Oberfläche der Membran kann durch eine auf die Membran auftreffende Strahlung erwärmt werden. Besonders einfach ist dies, wenn die Strahlung durch die Membran auf die Oberfläche trifft. Die Strahlung kann aber auch durch den Ventilkörper auf die Oberfläche treffen. Um eine besonders glatte Oberfläche zu erreichen, an der die Membran anliegt, kann die Oberfläche des Ventilkörpers vor der Befestigung poliert sein. Die Oberfläche des Ventilkörpers kann vor der Befestigung plasmageätzt, mit einem Ionenstrahl geätzt, durch eine chemische Modifikation geglättet sein und/oder die Oberfläche des Ventilkörpers kann vor der Befestigung hydrophilisiert worden sein. Dabei wird angestrebt, dass die Oberfläche des Ventilkörpers vor der Befestigung um den Ventiltrog einen Mittenrauwert (Ra-Wert) von unter 100 nm, bevorzugt weniger als 50 nm und ganz bevorzugt weniger als 20 nm aufweist Zur Ermittlung dieses Messwertes wird die Oberfläche auf einer definierten Messstrecke abgetastet und sämtliche Höhen- und Tiefenunterschiede der Oberfläche aufgezeichnet. Nach der Berechnung des bestimmten Integrals dieses Rauheitsverlaufes auf der Messstrecke wird abschließend dieses Ergebnis durch die Länge der Messstrecke dividiert.

Die Pumpe soll zur Förderung von Flüssigkeiten mit Flussraten unterhalb von 1 mL/h; besonders jedoch mit Flussraten unterhalb von 100 µL/h und ganz besonders im Bereich von 0,01 bis 80 µL/h dienen. Vorteilhaft ist es auch, wenn die Pumpe zur Förderung von Flüssigkeiten mit einem Pumpvolumen pro Pumpenhub zwischen 5 nL / Hub und 1 µL / Hub, besonders jedoch mit einem Pumpvolumen zwischen 25 nL / Hub und 500 nL / Hub und ganz besonders im Bereich von 75 bis 250 nL / Hub arbeitet. Die gegenüber einer durch Thermofusion mit einem erhitzen Fügestempel produzierten Pumpe verringerte Pumpe-zu-Pumpe Varianz der Förderrate wird durch Verschweißen der Oberseite des Ventiltrogs mit einer flexiblen Membran mit einem Laserstrahl erreicht. Die Ungenauigkeit der Führung des Laserstrahls in x-y-Richtung soll weniger als 1 Millimeter, bevorzugt weniger als 50 Mikrometer und ganz bevorzugt weniger als 5 Mikrometer betragen. Um auch Deckelfolien/Membranen aus durchsichtigen Polymeren auf Ventiltrögen, die ebenfalls aus durchsichtigen Polymeren bestehen, verschweißen zu können, was optische Messungen in verschiedenen Teilen des Spektrums innerhalb der Pumpe oder im Umfeld der Pumpe ermöglicht, können verschiedene Polymere mit verschiedenen Transmissionsbereichen verwendet werden, die mit UV-Laser, sichtbaren Laserstrahlen oder mit Infrarot-Laser verschweißt werden. Der bevorzugte Wellenlängenbereich eines solchen Lasers liegt zwischen 0,1 und 1000 Mikrometer, bevorzugt zwischen 0,4 und 50 Mikrometer und ganz bevorzugt zwischen 0,78 und 3 Mikrometer. In diesem Spektralberiech (nahes Infrarot) haben viele Polymere charakteristische Absorptionsbanden und können so durch einen fokussierten Laserstrahl über ihren Erweichungspunkt hinaus an exakt definierten Stellen erwärmt werden, ohne dass zusätzliche Absorber im Kunststoff oder auf der Kunststoffoberfläche verwendet werden (absorberfreies Durchstrahlschweißen). Auch Kunststoffe wie Polystyrol oder Ethylen-Norbornen-Kopolymerisate (COC oder COP), die für sichtbares Licht hochgradig durchlässig sind, lassen sich so absorberfrei schweißen. Die Leistung des Laserstrahls liegt zwischen 0,01 und 1000 Watt, bevorzugt zwischen 0,1 und 100 Watt und ganz bevorzugt zwischen 3 und 50 Watt.

Der Vorteil, Membranfolie und Ventiltrog mit einem Laser zu verschweißen statt mit einem Fügestempel thermisch zu verbinden, besteht darin, dass der Laser wesentlich besser justiert werden kann als ein erhitzter Fügestempel und dass der Schweißvorgang nicht flächig erfolgt, sondern auf eine Linie einer Naht begrenzt wird, deren Geometrie und Verlauf durch eine exakte Führung des Lasers mit einer x-y-Impräzision von weniger als 3 µm festgelegt werden kann. Die Breite der Schweißnaht liegt dabei unter 1 Millimeter, bevorzugt zwischen 250 und 20 Mikrometer. Vorteilhaft ist es, wenn die Befestigung auf einer Linie erfolgt, deren Breite 20 Mikrometer bis 3 Millimeter, bevorzugt zwischen 30 und 500 Mikrometer und besonders bevorzugt zwischen 50 und 300 Mikrometer liegt. Durch die genaue Führung des Lasers und die geringe Nahtbreite wird die beim thermischen Bonden mit Fügestempel nur schwer vermeidbare Dezentrierung des Ventiltrogs und der Grenze zwischen verschweißter und nicht verschweißter Membranfolie sowie das Ankleben der Membranfolie im Ventiltrog durch unbeabsichtigtes Verschweißen vermieden.

Die präzise Führung der Schweißnaht und er damit einhergehende geringe Wärmeeintrag in den Ventiltrog verhindert jedoch nicht in jedem Fall ein nicht-thermisches Verkleben von Membranfolie und Ventiltrog. Dies gilt insbesondere, wenn die Dicke der Ventilfolie größer ist als die Tiefe des Ventiltrogs oder wenn sich die Dicke der Folie und Tiefe des Trogs in einer zumindest ähnlichen Größenordnung bewegen. In diesem Fall kann das Anpressen der vorgespannten Folie auf den Kunststoffchip, was für eine feste Verschweißung bevorzugt wird, dazu führen, dass die Membranfolie auch in den Ventiltrog gepresst wird. Während eine präzise, örtliche Führung des Laserstrahls und eine exakte Dosierung seiner Leistung ein Verschweißen der Folie im Ventiltrog sicher verhindert, kann die hydrophile Wechselwirkung der wenig polaren Oberfläche des Ventiltrogs im Kunststoffchips und der ebenso wenig polaren Oberfläche der Membranfolie dazu führen, dass Folie und Chip aneinander haften. Auch eine mögliche elektrostatische Aufladung der wenig elektrisch leitenden Oberflächen kann eine solche Anhaftung begünstigen. Weiterhin kann die Rauheit der Oberfläche des Ventiltrogs, die sich bei Beobachtung mit einem Mikroskop mit geeigneter Vergrößerung wie ein ungleichmäßiges Sandpapier darstellen kann, dazu führen, dass eine relativ weiche Membranfolie beim Anpressen für den Schweißvorgang auf diese mikroskopische Rauheit des Ventiltrogs sich mit diesen sandpapierartigen Strukturen verhakelt. Alle genannten Effekte, allein oder in Kombination, können dazu führen, dass sich eine Wechselwirkung zwischen Membranfolie und Ventiltrog ausbildet, die dazu führt, dass der Pumpvorgang behindert wird. Dies kann sich in einer verminderten Pumpleistung oder einem Ausfall der Membranpumpe äußern. Anders als bei einem versehentlichen thermischen Verschweißen von Ventiltrog und Membranfolie, was besonders bei dem oben geschilderten thermischen Bonden/Verschweißen mit einem erhitzten Metallstempel einen häufiger Nebeneffekt darstellt, sind die im Fall des Laserschweißens beschriebenen Wechselwirkungen zwischen Membran und Folie zumindest teilweise reversibler Natur. Sie können also während des Pumpvorgangs teilweise aufgehoben werden. Trotzdem ist die Stärke, mit der Membranfolie und Ventiltrog wechselwirken können, mitunter so substanziell, dass geeignete Gegenmaßnahmen getroffen werden müssen.

Eine prinzipiell einfache Methode zur Reduktion der mechanischen Wechselwirkungen zwischen Chip und Membranfolie, die durch die Mikrorauheit des Ventiltrogs ergeben kann, besteht darin die Oberfläche der Ventiltröge zu glätten. Da der Chip mit seinen Ventiltrögen bevorzugt durch Spritzguss hergestellt wird, bietet es sich daher besonders an, die Ventiltröge in der Spritzgussform, die dort im Prinzip leicht zugängliche konvexe Strukturen darstellen, durch Polieren zu glätten. Auf diese Weise lassen sich Rauheiten bis zu einer Feinheit von wenigen Nanometern reduzieren. Die Wechselwirkungen von Membranfolie und Ventiltrog können so gegenüber den Wechselwirkungen, die ein Chip produziert, dessen korrespondierende Spritzgussform lediglich gefräst und geschliffen wurde, deutlich vermindert werden. Obwohl prinzipiell sehr einfach, sind die handwerklichen Anforderungen, die an die Feinpolitur einer Spritzgussform aus Metall - mitunter aus Hartmetall - im Nanometerbereich gestellt werden, sehr hoch. Technisch weniger anspruchsvoll ist das Glätten der Ventiltröge auf dem Chipkörper. Bedingt durch das hier verwendete wesentlich weichere Material, meist Polystyrol, Polyolefin oder ein anderer Kunststoff, ist ein Polieren der Ventiltröge einfacher als ein Polieren der Spritzgussform - allerdings für den Preis, dass jeder einzelne gespritzte Chip und nicht nur die eine Form nachbearbeitet werden muss. Außer durch Polieren lässt sich die Oberfläche in den Ventiltrögen der Chips auch chemisch glätten. Hierzu kommen bevorzugt Lösungsmittel zur Anwendung, die das Polymer, aus dem der Chip gefertigt worden ist, in begrenztem Umfang angreifen. Feine Strukturen, wie die Mikrokörnung eines Ventiltrogs lassen sich so egalisieren. Für Chips aus Polyolefin kommen dafür Mischungen aus Tetrahydrofuran (THF) mit Wasser (bevorzugt 5 bis 70% THF Gehalt) oder Mischungen aus Methyethlyketon (MEK) mit Wasser (bevorzugt 5 bis 25% MEK Gehalt) zur Anwendung. Für Polystyrol empfiehlt sich Isopropanol im Gemisch mit Wasser. Generell sollte eine Mischung aus einem Lösungsmittel, das das Polymer, aus dem der Ventiltrog besteht, angreift und einem Lösungsmittel, gegenüber dem der Ventiltrog resistent ist, zur Anwendung kommen. Dadurch lassen sich Mischungen einstellen, gegenüber denen der Ventiltrog relativ resistent aber nicht inert ist. Auf diese Weise können die sehr feinen Strukturen, die die Rauheit des Ventiltrogs hervorrufen, geglättet werden, ohne dass die wesentlich gröberen Strukturen, die die Kanäle im Chip und die Kavitäten der Ventiltröge darstellen, nennenswert beeinträchtigt werden. Auch Lösungsmittelgemische, die Komponenten enthalten, die nicht mit Wasser mischbar sind, sind zum Glätten der Ventiltröge verwendbar. So sind Mischungen aus chlorierten Lösungsmitteln, wie Chloroform oder Dichlormethan mit Ethanol oder Isopropanol gerade zum Glätten der Oberflächen von Polyolefinen gut geeignet. Auch physikochemische Methoden wie Plasmaätzen können die Ventiltröge nach dem Spritzguss oder auch von individuell gefrästen Chips und Ventilen egalisieren. Dabei wird der Chip mit den Ventilen im Vakuum (0,001 bis 0,1 mbar) einem durch Hochspannung erzeugten Sauerstoffplasma oder Luftplasma ausgesetzt. Dabei werden die feinen Rauheiten oxidativ angegriffen und so geglättet. Zudem bewirkt das Plasma die Anlagerung von Sauerstoffradikalen auf der Polymeroberfläche sowie die Bildung von Oxidationsprodukten des Polymers. Hierbei entstehen insbesondere Carbonsäuren, Alkohole, Aldehyde, Ketone, Epoxide, Oxetane, Peroxide sowie andere teilweise schlecht charakterisierte radikalische Sauerstoff-Adukte. Alle diese Verbindungen bewirken zusätzlich zu einer eventuellen Glättung der Oberfläche der Ventilkavitäten eine erhebliche Steigerung der Polarität der Oberfläche. Dies verringert hydrophobe Wechselwirkungen zwischen Membranfolie und Ventilkavität und verringert so in erheblichem Ausmaß eine Adhäsion zwischen Ventil und Folie.

Ein ebenfalls sehr gutes Verfahren um Wechselwirkungen zwischen Ventilkavität und Folie zu verringern besteht darin, die Innenseiten der Ventile mit polaren chemischen Verbindungen zu beschichten. Besonders gut geeignet sind dazu Detergenzien, die mit ihrer lipophilen Teilstruktur fest auf der Polymeroberfläche des Ventiltrogs anbinden und mit Ihrer polaren Kopfgruppe die Adhäsionsfähigkeit der Ventilfolie an den Ventiltrog nahezu auf null reduzieren. Zu diesem Zweck sind sowohl anionische, kationische wie neutrale Detergenzien geeignet. Praktischerweise werden diese Detergenzien aus einer wässrigen Lösung des Detergens bei einer Konzentration von 0,001 bis 1 % aufgebracht. Dazu wird der Chip mit den Ventiltrögen kurz (mindestens ca. eine Sekunde) in die wässrige Lösung des Detergens eingetaucht. Die lipophilen Enden des Detergens orientieren sich dabei selbsttätig auf der Oberfläche des Chips/des Ventiltrogs und formieren eine dichte Schicht, wobei sich die polaren Kopfgruppen des Detergens in Richtung des wässrigen Mediums orientieren, aus der die Detergenzien aus der Lösung in Richtung Chip/Ventiltrog diffundieren. Zu diesem Zweck geeignete Detergenzien sind klassische Seifen, also Alkalisalze höherer Carbonsäuren, aber besonders polymere Carbonsäuren wie z.B. Polyacrylate (Sigma-Alrich), die auf Grund ihrer höheren Avidität fester auf der Oberfläche des Chips bzw. des Ventiltrogs haften. Gleichermaßen geeignet sind Sulfate oder Sulfonsäuren wie Sodiumdodecylsulfate (SDS, Sigma-Aldrich) oder ihre polymeren Analoge. Als besonders geeignet haben sich auch höhermolekulare Naturstoffe wie Lecithin oder chemisch gereinigte Lecithin-ähnliche Verbindungen (z.B. Phospholipon G90, Lipoid AG, Köln) erwiesen. Die anionische Funktionalität wird bei diesen Verbindungen über eine Phosphatgruppe dargestellt. Geeignete katonische Polymere stellen quartäre Ammoniumsalze mit mindestens einen höheren Alkylrest ("Invertseifen") wie Tetradecyltriammoniumchlorid dar. Analog zu den anionischen Polymeren lässt sich auch hier die Adsorption auf dem Chip/Ventiltrog durch die Verwendung polymerer Strukturen steigern. Als besonders geeignet haben sich Polyethylenimin (Sigma-Aldrich) sowie höhermolekulare Polyamine mit oder ohne quartäre Aminogruppen erwiesen. Ebenfalls sehr geeignet für die hydrophile Beschichtung von Chipoberfläche/Ventiltrog sind auch neutrale Detergenzien. Neben niedermolekularen Verbindungen wie Tween 20 (Sigma-Alrich) hat sich die Klasse der Surfynole (z.B. Surfynol 61, Surfynol 104, Surfynol AD01, Surfynol AS 5020, Surfynol AS 5040, Surfynol AS 5060, Surfynol AS 5080, Surfynol AS 5180 sowie der Tegoprene (Tegopren 5840, Tegopren 5860, Tegopren 5885) erwiesen. Die genannten Surfynole und Tegoprene sind alle von Evonik, Essen, erhältlich. Diese Verbindungen sind teilweise wasserlöslich; teilweise ist es empfehlenswert für die Beschichtung des Mikrofluidikchips, zunächst eine Stocklösung des neutralen Polymers mit einer Konzentration von ca. 10% in Isopropanol zuzubereiten und dann mit Wasser auf die Zielkonzentration von 0,001 bis 1% zu verdünnen.

Da die Detergens-Beschichtung des Ventilrands auf dem die Membranfolie angeschweißt werden soll zu einer verringerten Stabilität der Schweißnaht führen kann, empfiehlt es sich eine Beschichtung des Ventilrands zu vermeiden bzw. die Dicke der Beschichtung zu verringern oder die Membranfolie nicht zu verschweißen, sondern heiß zu verkleben. Auf jeden Fall sollte auch beim Kleben die sehr gute Dosierbarkeit der Energieeintrags und Positioniergenauigkeit eines Lasers Verwendung finden, so dass ein Heißklebeprozess konventionellem Kleben vorzuziehen ist.

Ein praktikables Verfahren, die Detegensbeschichtung auf die Innenseite des Ventilkörpers zu beschränken - also nicht die gesamte Chipoberfläche hydrophil zu beschichten - besteht darin, die Ventilregion auf dem Chip mit einem Klebeband abzudecken, das in der Position der Ventiltröge gelocht ist. Auf diese Weise werden bei einer Plasmabehandlung des Chips lediglich die Innenseiten der Ventiltröge dem Sauerstoff- oder Luftplasma ausgesetzt während die Ventilränder durch das Klebeband geschützt werden. Eintauchen des so präparierten Chips in eine der genannten Detergenslösungen bewirkt, dass lediglich die Innenseiten der Ventiltröge hydrophil beschichtet werden, während die hydrophile Beschichtung auf den Ventilrändern mit Abziehen des schützenden Klebebands entfernt wird. Anschließendes Verschweißen ist so problemlos möglich. Verwendung von Detergenzien, die bevorzugt auf dem plasmaaktivierten Teil der Oberfläche anbinden, nicht jedoch auf dem nativ gebliebenen Teil, erlaubt es nach der Plasmaaktivierung zunächst das schützende Klebeband zu entfernen und dann den gesamten Chip mit Detergenzslösung zu behandeln. Besonders geeignet für diese Art der Behandlung ist Tegopren 5840 - es bindet überwiegend nur auf dem plasmaaktivierten Teil des Chips an und erlaubt so, eine Detergens-Behandlung des Chips nach Entfernen des schützenden Klebebands ohne dass dadurch die Festigkeit der anschließenden Laserverschweißung beeinträchtigt würde. Diese Eigenschaft des Tegopren 5840 aber auch der Surfynole AS50xx erlauben es, bei der Abdeckung der Ventilränder während der Plasmaaktivierung auf ein Klebeband zu verzichten und stattdessen eine starre Abdeckmaske zu verwenden, die leichter positioniert werden kann aber nur bedingt oder gar nicht zusammen mit dem Chip in der Detergenslösung behandelt werden kann. Andere Detergenzien wie z.B. Phospholipon G90 haften auf einem plasmaaktivierten wie nicht plasmaaktivierten Chip ähnlich gut und erlauben so eine hydrophile Beschichtung ohne Plasmaaktivierung.

Zum Heißkleben der Chips sollte eine mit hitzeaktivierbarem Klebstoff beschichtete Folie verwendet werden. Eine Beschichtung des Chipkörpers mit Klebstoff ist nur dann sinnvoll, wenn bei der Beschichtung Sorge getragen wird, dass möglichst wenig, bevorzugt aber gar kein Klebstoff in die Ventiltröge eindringen kann. Dies macht den Einsatz von Klebstoff direkt auf dem Chipkörper zwar möglich jedoch relativ aufwändig. Eine Beschichtung der Folie mit Klebstoff ist deswegen eine Beschichtung des Chipkörpers zumeist vorzuziehen. Zum laser-aktivierten Heißkleben von Membranfolie und Chips können kommerzielle Heißklebefolien zum Einsatz kommen (z.B. MH-92824, 93025 oder 92804; Adhesive Research, Dublin, Irland) oder mit Polyurethan-basiertem Heißkleber beschichteten Polyolefin-Folien (Folie: Denz BioMedical GmbH, Mäder, Österreich); Kleber: Dispercoll U53 blended mit 7,5% Desmodur Ultra DA-L, beide Covestro AG, Leverkusen). Zur Verklebung sollte die Membranfolie eine Dicke von 30 bis 300 µm aufweisen. Bevorzugt sind etwa 100 µm. Klebstoffschichtdicken zwischen 2 und 100 µm sind dabei praktikabel. Bevorzugt sind etwa 7 µm Dicke. Wegen einer Nachvernetzung von Dispercoll und Desmodur nach dem laser-gestützten Heißkleben sollte die Klebstoffnaht bis zum Erreichen der Endfestigkeit mindestens 12 Stunden aushärten

Weiterführend betrifft die Erfindung eine Schweißvorrichtung gemäß Anspruch 9, bei der ein Laser computergesteuert und mit von einer Digitalkamera automatisch erfassten Start- und Endkoordinaten so bewegt wird, dass die Deckelfolie/Membran im Umkreis aller Ventile und Pumpen an den korrekten Positionen geschweißt werden. Darüber hinaus betrifft die Erfindung eine Spannvorrichtung gemäß Anspruch 10, um die Deckelfolie/Membran faltenfrei mit der korrekten Vordehnung und bündig auf der Ventiloberseite so zu spannen, dass der Druck, den die Folie auf die Ventiloberseite ausübt überall gleich ist, um so eine gleichförmige Schweißnaht zu erzielen. In dem Fall, dass mehrere oder zahlreiche Ventiltröge in einen Mikrofluidikchip integriert sein, ist die erfindungsgemäße Spannvorrichtung in der Lage, die Deckelfolie/Membran faltenfrei, mit der korrekten Vordehnung und bündig auf der Chipoberfläche so zu spannen, dass der Druck den die Folie auf die Chipoberfläche ausübt, überall gleich ist, um so eine gleichförmige Schweißnaht zu erzielen.

Die beschriebenen Pumpen und Ventile können zur individuellen Zudosierung oder Abfuhr von kleinen Mengen an Flüssigkeiten oder Gasen in Mikroreaktoren und Mikroreaktorenarrays, wie z.B. Mikrotiterplatten, eingesetzt werden.

Ausführungsbeispiele sind in der Zeichnung dargestellt und werden im Folgenden beschrieben. Es zeigt
- Figur 1: eine mikrofluidische Pumpe mit mehreren Ventilen und leeren Ventiltrögen,
- Figur 2: die in Figur 1 gezeigte Pumpe mit zwei gefüllten Ventiltrögen,
- Figur 3: die in Figur 1 gezeigte Pumpe mit einem gefüllten Ventiltrog,
- Figur 4: eine Spannvorrichtung zum Aufbringen einer Membran,
- Figur 5: eine seitliche Ansicht einer Schweißvorrichtung,
- Figur 6: eine Draufsicht auf die in Figur 5 gezeigte Schweißvorrichtung,
- Figur 7: die Position der Einstellschrauben an der in Figur 5 gezeigten Schweißvorrichtung,
- Figur 8: die Position der in Figur 7 gezeigten Einstellschrauben in der Draufsicht,
- Figur 9: die Position der Kraftsensoren und Positionierstifte an der in Figur 5 gezeigten Schweißvorrichtung,
- Figur 10: eine Ansicht einer Vakuumkammer aus Glas,
- Figur 11: einen Schnitt durch die in Figur 10 gezeigte Vakuumkammer,
- Figur 12: eine Ventilkontur ohne Schweißnaht,
- Figur 13: eine Schweißkontur und
- Figur 14: eine Ventilkontur mit Schweißnaht.

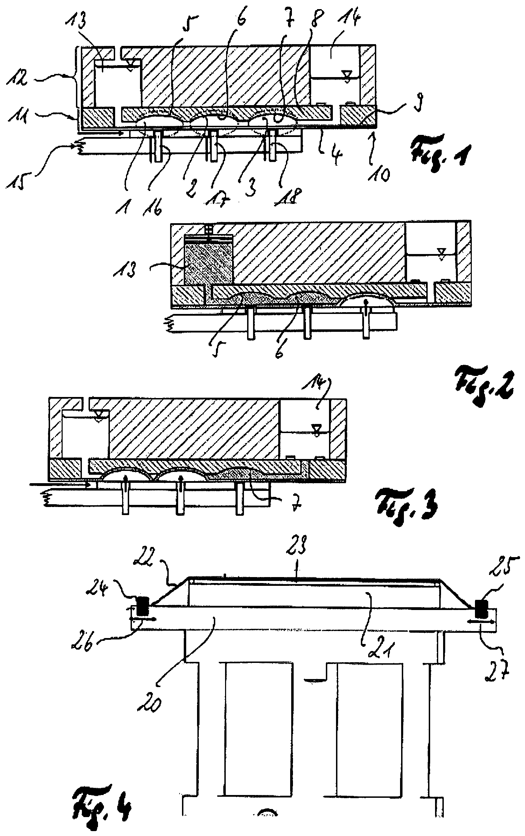

Die Figuren 1 bis 3 zeigen eine Pumpfolge mehrerer mikrofluidischer Pumpen 1, 2, 3, bei denen eine flexible Membran 4, Ventiltröge 5, 6, 7 eines Ventilkörpers 8 abdeckt. Um die flexible Membran 4 an dem Ventilkörper 8 zu befestigen, wurde die den Ventiltrögen 5, 6, 7 zugewandte Oberfläche 9 der Membran 4 mit einem Laserstrahl erwärmt. Da im vorliegenden Fall mehrere Ventiltröge 5, 6, 7 nebeneinander liegen wird die Membran 4 nur im Randbereich 10 am Ventilkörper 8 befestigt.

Im Ausführungsbeispiel ist der Ventilkörper 8 ein Mikrofluidchip 11, über dem eine Mikrotiterplatte 12 angeordnet ist. In dieser Mikrotiterplatte 12 befinden sich Reservoire 13 und Wells 14. Die Mikrotiterplatte 12 wird durch ein Schüttelarray 15 bewegt, in dem Kanäle 16, 17, 18 einer auf die Membran wirkenden Pneumatik angeordnet sind.

Die Figur 2 zeigt, wie Flüssigkeit aus dem Reservoir 13 in die Ventiltröge 5 und 6 fließt, und die Figur 3 zeigt, wie Flüssigkeit im Ventiltrog 7 mit dem Well 14 in Verbindung steht.

Die Figur 4 zeigt einen Kolbentisch 20 mit einem darüber angeordneten Positioniertisch 21, über dem eine Membran 22 gespannt ist. Die Membran 22 liegt auf einem Polymergrundkörper 23 auf und wird beidseitig durch Magnete 24 und 25 gehalten, die über eine Schiene in Richtung der Pfeile 26, 27 verschiebbar sind, um die Membran 22 zu spannen.

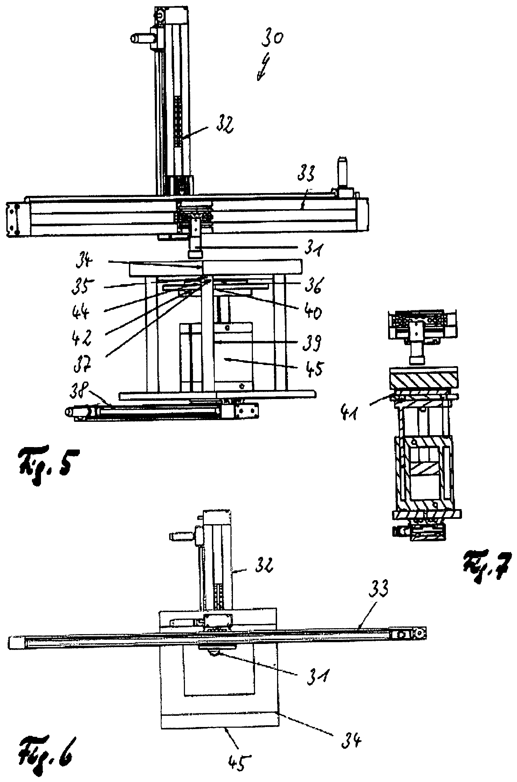

Das Gesamtsystem der Vorrichtung zum Verschweißen von Ventiltrog bzw. Pumpentrog und Deckelfolie/Deckelmembran wird in Figur 5 gezeigt: die Schweißvorrichtung 30 beinhaltet eine Strahlenquelle 31 (z.B. Thulium Faser-Laser), ein Achsensystem mit den Achsen 32 und 33, das es erlaubt, die Einspannvorrichtung in einer Ebene, mindestens aber in einer Richtung, unter dem Laser zu verschieben, um so eine Schweißnaht mit definierter Lage zu generieren. Die Einspannvorrichtung selber erlaubt es, mindestens einen Ventiltrog, normalerweise aber zwei oder mehr Ventiltröge bzw. Pumpentröge, die in einem Chip/ PolymerGrundkörper 37 integriert sind, auf dem beweglichen Achsensystem zu befestigen. Zudem wird eine transparente flexible Membran 38 über dem Polymergrundkörper 37 gespannt. Die Einspannvorrichtung besteht aus einem Zylinder 39 mit Kolbentisch 40, einem Positioniertisch 36, mindestens vier Einstellschrauben 41 und mindestens vier Kraftsensoren 42. Die Kraftsensoren 42 erlauben es, die Folie isotrop mit Hilfe einer Spannbrille 34 zu spannen. Die Einspannvorrichtung mit Polymergrundkörper und gespannter Membran wird durch Anheben des Kolbentisches gegen eine Glasplatte 35 gepresst. Die Glasplatte übt so einen Druck auf den Polymergrundkörper mit Chip aus. Durch Einbringen der Energie des Lasers durch die Glasplatte auf die über den Polymergrundköper gespannte Membran, werden Membran wie Polymergrundköper thermisch erweicht oder aufgeschmolzen. Durch den Druck zwischen Glasplatte und Polymergrundkörper wird ein Materialfluss zwischen Membran und Polymergrundkörper induziert, der nach dem Erstarren der geschmolzenen Polymere zu einer schmalen, exakt positionierten und mechanisch sehr haltbaren Schweißnaht führt

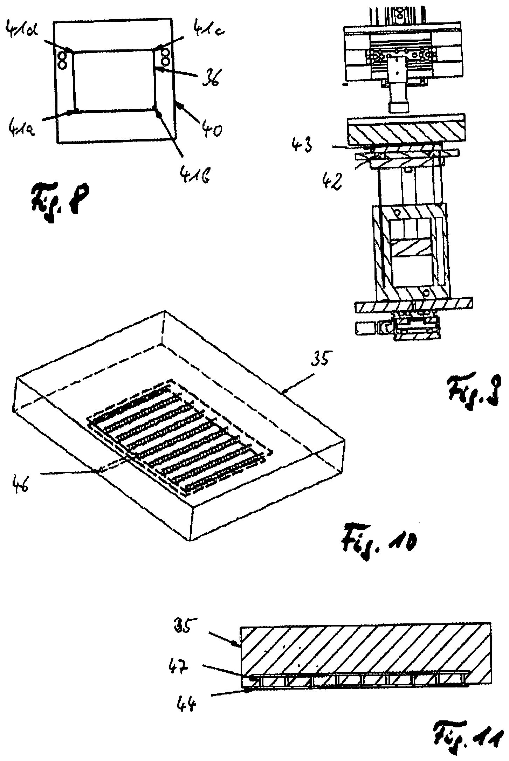

Der Polymergrundkörper wird über eine Zentriervorrichtung, die z.B. aus 2 Positionierpins 43, die in korrespondierende Passlöcher auf dem Grundkörper passen, auf dem Positioniertisch exakt ausgerichtet und dabei in eine fixe Position gebracht (Figur 9). Der Positioniertisch liegt auf vier Kraftsensoren 42 auf, die in den Kolbentisch eingelassen sind, welcher fest mit einem Zylinder verbunden ist. Die vier Kraftsensoren messen die Kräfte, die auf die vier Ecken des rechteckigen Positioniertisches aufgebracht werden, wenn der Positioniertisch den Polymergrundkörper mit der über ihn gespannten Folie von unten gegen die Glasplatte 35 drückt. Durch vier Schrauben 41a, 41b, 41c, 41d an den jeweiligen Ecken (Figur 7), die über ein Gewinde im Positioniertisch 36 befestigt sind, lässt sich die Kraftverteilung einstellen. Die Schrauben reduzieren oder erhöhen dabei den Abstand des Positioniertischs zum Kolbentisch, so dass die Anpresskraftkraft an dieser Stelle reduziert oder erhöht wird und so eine gleichmäßige Verteilung des Anpressdrucks über den gesamten Polymergrundkörper sicher gestellt werden kann.

Die Stahlquelle 31 wird in einem Abstand mit einer bestimmten Fokuslage planparallel zum Chip 37 positioniert, so dass der Fokus des Lasers entweder auf oder nahebei der durch Polymergrundkörper und Folie aufgespannten Ebene liegt. Je näher der Fokus des Lasers an dieser Ebene liegt, desto schmaler wird die Schweißnaht und desto geringer kann die Abstrahlleistung des Lasers ausfallen. Die Fokuslage entscheidet dabei mit über den Energieeintrag in den Polymerkörper und die Membranfolie an den zu verschweißenden Positionen und somit über die Genauigkeit des Schweißvorgangs. Die Fokuslage kann dabei entweder fix sein oder variabel über ein Achsensystem mit den Achsen 32 und 33 eingestellt werden, das eine Verschiebung des Lasers senkrecht zur Anordnung des Polymergrundkörpers mit Folie erlaubt.

Der Polymerkörper 37 und die Membran 44 werden dabei über den Zylinder 39 von unten an eine Glasplatte 35 gedrückt, die im Wellenlängenbereich des Lasers eine hohe spektrale Durchlässigkeit besitzt. Speziell in einem Wellenlängenbereich von 1940 nm ist Glas als Material, den Polymerkörper an die Membranfolie zu pressen hochgradig geeignet, da Glas im Nahinfrarot-Bereich unterhalb 3 µm Wellenlänge elektromagnetische Strahlung nur minimal absorbiert. Diese Glasplatte wird durch einen Rahmen oder eine Spannbrille 34 fixiert und parallel zur Strahlquelle 31 ausgerichtet. Der Abstand wird ebenfalls durch die Fokuslage des Lasers auf dem Polymerkörper 37 bestimmt.

Über ein Achsensystem mit den Achsen 32 und 33 kann die Strahlenquelle 31 parallel zum Polymergrundkörper 37 bewegt werden und somit die zu verschweißenden Konturen abfahren. Die Leistung und Vorschubgeschwindigkeit des Lasers sind dabei variabel einstellbar.

Die Bewegung des Zylinders 39 relativ zur Strahlenquelle 31 wird über mindestens zwei Achsen 32 und 33 realisiert, die entweder den Zylinder 39 über einen Verfahrtisch 45 oder die Strahlenquelle 31 im Raum bewegen.

Die flexible Membran 44 kann durch eine Verspann-Vorrichtung parallel über den Mikrofluidik-Grundkörper 37 gespannt werden.

Das Spannen der flexiblen Membran kann über verschiedene Möglichkeiten geschehen. Um einen möglichst planparallelen Auftrag der Folie auf die Glasscheibe zu bekommen, ist es möglich via selektivem Laserätzen (Meineke et al. 2016) - Mikrokanäle 46 in die Glasplatte 35 zu ätzen (Figur 10 mit der Vakuumkammer 47 aus Glas), die es erlauben durch eine angeschlossene Vakuumpumpe einen Unterdruck in diesen Kanälen zu erzeugen und somit die flexible Membran an die Glasplatte zu saugen (Figur 11), bevor der Mikrofluidik-Grundkörper an diese gepresst wird. Dadurch werden Unebenheiten der flexiblen Membran reduziert.

Eine weitere Spannmöglichkeit nutzt Magnete, die in den Kolbentisch eingelassen sind. Die Folie wird per Hand über dem Grundkörper vorgespannt und dann über weitere gegenpolige Magnete gehalten. Die Magnete sind dabei auf einer fixierbaren Schiene gelagert, die in eine Richtung beweglich ist, so dass die Membranfolie weiter gedehnt und dann in der gewünschten Position fixiert werden kann (Figur 4). Dies erhöht die Spannpräzision.

Andere Möglichkeiten der Spannung der flexiblen Membran sind pneumatische Zylinder. Dabei wird die Membran auf einer Seite fixiert (z.B. über Magnete), dann über den Grundkörper gespannt und auf der gegenüberliegenden Seite mit einem pneumatischen Zylinder fixiert, dieser Zylinder ist auf einem orthogonal gelagerten weiteren Zylinder fixiert, so dass die Membran durch ausfahren des Zylinders in x-Richtung mit definierter Kraftentfaltung weiter gedehnt bzw. gespannt werden kann. Daraus resultiert eine homogene Spannung über den gesamten Schweißbereich.

Der Polymergrundkörper enthält Mikrostrukturen, die in ihrer Gesamtheit im Zusammenspiel mit der Membranfolie mehrere Pumpen und Ventilsysteme bilden. Durch eine Vielzahl von Ventilen, Pumpkammern und Kanälen, sowie Ein- und Auslässen entsteht ein mikrofluidischer Array, welches den Flüssigkeits- oder Gastransport von Fluideinlässen individuell zu den Mikroreaktoren ermöglicht.

Ein derartiger Array kann aus einer aktorischen Anschlussleiste, wie im Europäischen Schutzrecht EP3055065 beschrieben, und dem Mikroreaktorenarray mit integriertem Mikrofluidik-Chip bestehen. Der Mikrofluidik-Chip besteht aus Ventilen, die aus einem Kugelsegment mit einer konzentrischen Liniendichtung und einer flexiblen Membran ausgeführt sind. Mikrokanäle münden in das Zentrum des Ventils und auf den Umfang des Kugelsegments. Die flexible Membran ist über eine Aktorik bewegbar und kann verschlossen und geöffnet werden.

Die Steuerung der einzelnen Membranventile kann durch unterschiedliche Verfahren realisiert werden. Angedacht sind hier unter Anderem pneumatische Steuerkanäle, aber auch optisch, thermisch, hydraulisch, elektromechanisch oder magnetisch aktivierte Schalter können zur Fluidkanalsteuerung verwendet werden.

Eine Möglichkeit ist es eine peristaltische Bewegung zu erzeugen, bei der zunächst das Fluid durch den Einlass in die geöffneten Einlassventile und die geöffnete Pumpkammer gepresst wird. Durch darauffolgendes Schließen der Einlassventile wird so ein präzises Fluidvolumen innerhalb der Pumpkammer gefangen. Durch Öffnen eines Auslassventils und Schließen der Pumpkammer kann so das Volumen der Pumpkammer in Richtung Kanalauslass gefördert werden (Figuren 1 bis 3. Dabei ist das geförderte Volumen maßgeblich von der Präzision der Pumpkammer geprägt, welche aus der Struktur des Polymerkörpers und der Deckelung durch die Membranfolie generiert wird. Man kann mit dieser Technik über einen Einlass und eine Pumpkammer auch mehrere fluidische Kanäle ansteuern (Abbildung 11).

Die beschriebene Erfindung erhöht maßgeblich die Präzision der Ventildeckelung; primär verringert sie die Variation das Volumen des durch Ventiltrog und Deckelfolie eingeschlossenen Volumens und verbessert somit die Präzision des Dosiervorgangs. Der mechanistische Grund dafür ist, dass das Laserdurchstrahlschweißen eine präzisere Geometrie der Schweißkante - oder Schweißnaht erlaubt. Dies wird durch einen streng lokal begrenzten Energieeintrag und somit Erweichung des Substrates nur an genau definierten Stellen bzw. entlang von präzise definierten Nähten erreicht. Ein ungewollter relevanter Wärmeübertrag außerhalb der definierten Bereiche, insbesondere ein Energieeintrag in den Pump/Ventiltrog wird dadurch fast vollständig vermieden.

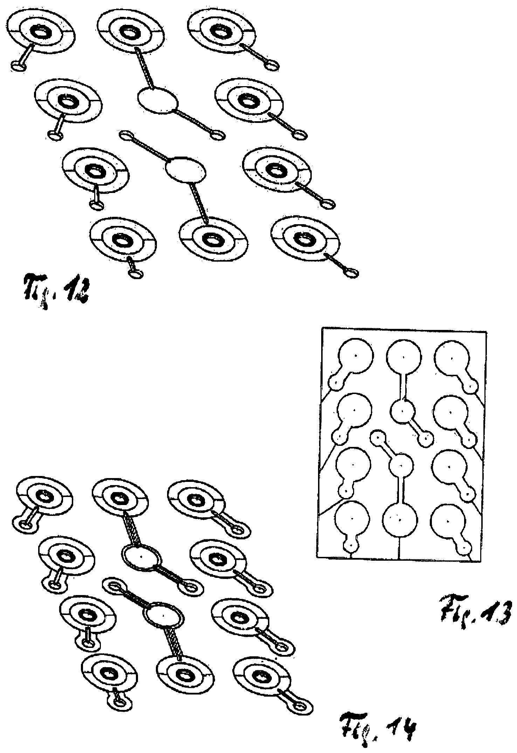

Der Polymerkörper (m2p-labs GmbH, Baesweiler, MTP-MF32-BOH 1 aus Topas^{®}) wird wie beschrieben auf dem Positioniertisch fixiert und die Membranfolie (Topas^{®} ELASTOMER E-140, 100 µm Stärke) über den zu verschweißenden Bereich gespannt. Ein Beispiel für die Ventilkontur vor dem Verschweißen ist in Figur 12 zu sehen. Über ein CAD-Programm (z.B. Autodesk AutoCAD) wird eine entsprechende Schweißkontur erstellt (z.B. Figur 13 Schweißkontur). Diese Schweißkontur kann dann in das Schweißprogramm geladen werden. Die Verfahrgeschwindigkeit an einzelnen Punkten, die Strahlleistung und die Position zum Aktivieren und Deaktivieren des Lasers können ebenfalls eingestellt werden. Der zu verschweißende Körper wird dann über den Zylinder (Festo ADN-100-60-A-P-A) mit einem Druck von 0,1 bis 5 bar, bevorzugt mit 0,75 bar an die Glasplatte 35 gepresst. Zu hoher Druck führt dazu, dass sich die Membranfolie verformt und in die Ventile gedrückt wird. Zu niedriger Druck verlangsamt den Materialfluss innerhalb der Schweißnaht und verringert so die Festigkeit der Schweißnaht. Durch Auslesen der Kraftsensoren (ME-Messtechnik KM26) wird sichergestellt, dass die Kraftverteilung homogen ist, oder neu über die Einstellschrauben justiert werden muss. Eine inhomogene Kraftverteilung führt zu einer inhomogenen Fokussierung des Lasers.

Zum Verschweißen kann ein Thulium Faserlaser der Firma "IPG Laser" mit der Wellenlänge 1940 nm eingesetzt werden. Diese Wellenlänge ist geeignet, da das verwendete Polymer (COC, Cycloolefin-Copolymer; ein Kopolymerisat aus Norbornen und Ethen) in diesem Wellenlängenbereich absorbierend ist. Eine entsprechende Optik mit einer Brennweite von 20 mm fokussiert den Laserstrahl. Für den Schweißvorgang wird je nach Vorschubgeschwindigkeit eine Laserleistung von 2 bis 50 W benötig; bevorzugt sind 5 bis 25 Watt bei einer Vorschubgeschwindigkeit des Lasers von 10 mm/min bis 2000 mm/min und besonders bevorzugt 8 Watt bei einer Vorschubgeschwindigkeit von 200 mm/min. Die erforderliche moderate Laserleistung erlaubt die Auswahl zwischen einer großen Anzahl von Lasern, wie z.B. ist einem Thulium Faser Laser der Firma Keopsys (CW_Laser CTFL-TERA) oder dem IPG Laser (TLM-200 Thulium CW Fiber Laser Module).

Das hier beschriebene Verfahren kann aber außer für COC (Topas^{®}) auch für andere Polymere, die im Infrarot-Bereich absorbieren, eingesetzt werden. Beispiele sind hierfür Polystyrol, Polymethylmetharcylat, Polycarbonat, Polyethylen etc.

Die Strahlenquelle kann über ein Achsensystem (z.B. Bosch Rexroth Linearsysteme) in x-, y- und z-Richtung über den Schweißbereich bewegt werden, um die einzelnen Ventil-, Kanal, und Pumpenkonturen mit einer Geschwindigkeit von beispielsweise 200 mm/min bei einer Laserleistung von ca. 8 W abzufahren. Der Laserstrahl wird dabei nur an den designierten Konturen aktiviert, wodurch ungewollter Energieeintrag vermieden wird. Die Strahlquelle wird bei einer Brennweite von 20 mm auf eine Höhe von ca. 17 mm relativ zur Polymerkörperoberfläche positioniert. Durch Änderung der Brennweite muss diese Höhe angepasst werden. Um die Kanäle nicht durch erhöhten lokalen Energieeintrag aufzuschmelzen muss die Schweißkontur in einem präzisen Abstand zum Kanal von ca. 0,3 mm generiert werden. Die Figur 14 zeigt eine Ventilkontur mit Schweißnaht.

Die flexible Membran wird nur an den Stellen erweicht, die vom Laserstrahl durchdrungen werden und über thermische Fusion mit dem Grundkörper verbunden. Durch die hohe Verfahrgeschwindigkeit der Strahlenquelle wird eine Aufschmelzung der Ventil- oder Kanalkonturen verhindert und die Schweißnaht definiert. Eine Variation der Strahlenleistung kann diese Naht weiter beeinflussen. Durch eine hinreichende Genauigkeit des Achsensystems kann somit eine hohe Präzision der Ventilkontur erreicht werden. Dies spiegelt sich direkt in der Präzision des Dosiervorgangs wieder.

Zur Messung der Präzision des Flusses wird der Mikrofluidik-Chip als Boden einer 48-Well Mikrotiterplatte luft- und flüssigkeitsabdichtend verklebt. Die Mikrotiterplatte wird auf einen orbitalen Schüttler gestellt, welcher mit bis zu 1500 UpM (Umdrehungen pro Minute) die Flüssigkeiten innerhalb der Mikrotiterplatte durchmischt. Die Transparenz des Polymerbodens, bzw. Mikrofluidik-Chips erlaubt es in jeder einzelnen Reaktionskammer optische Messungen an der sich darin befindlichen Flüssigkeit durchzuführen. So lassen sich beispielsweise Fluoreszenz-Signale von Green Fluorescent Protein, Fluorescein oder Riboflavin detektieren. Eine solche Messanordnung ist im BioLector Pro der Firma m2p-labs GmbH, Baesweiler, Deutschland, realisiert.

Für die Messung der Flussrate wurde über den Kanaleingang des in EP3055065 beschriebenen Mikrofluidikchips eine Mischung aus 50mM wässriger Pufferlösung (K2HPO4) mit 70µM Fluoreszein gefüllt. Über einen Lichtwellenleiter und entsprechende optische Filter mit der Anregungswellenlänge 436 nm und Detektionswellenlänge 540 nm und der Auswerteelektronik des BioLector Pro der Firma m2p-labs können so auch kleinste Änderungen der Fluoreszenz in den Reaktionskammern oberhalb der Mikrofluidikplatte nachgewiesen werden Die fluoresceinhaltige Pufferlösung wird über die beschriebene Aktorik des Pumpvorgangs vom Kanaleingang im Reservoirwell zum Kanalausgang in der Reaktionskammer gefördert. In der Reaktionskammer werden 800 µL einer Pufferlösung bestehend aus 50mM K2HPO4 vorgelegt. Der BioLector Pro besitzt 16 Reservoirwells und 32 Reaktionskammern. Aus jedem Reservoirwell kann über den Boden der Mikrofluidikplatte in jeweils vier Reaktionskammern Lösung gefördert werden. Füllt man in alle Reservoirwells dieselbe fluoresceinhaltige Pufferlösung und steuert alle in dem Mikrofluidikchip befindlichen Pumpen und Ventile auf gleiche Weise an, so wird in alle 32 Reaktionskammern die Fluoresceinlösung auf gleichartige Weise gefördert. Diese Anordnung erlaubt damit zu prüfen, ob alle Pumpen und Ventile, die die Fluoresceinlösung aus den Reservoirwells in Reaktionsgefäße fördern, gleichartig und gleichmäßig fördern. Dies lässt sich quantifizieren, indem die Intensität der Fluoreszenz der Fluoreszeins, das aus den Reservoirwells in die Reaktionskammern gepumpt wird, in regelmäßigen Abständen in allen Reaktionskammern gemessen wird und die Änderung der Fluoreszenz über der Zeit bestimmt wird. Auch diese Messung lässt sich im BioLector Pro vollautomatisch realisieren. Mit 0,5 bar pneumatischem Druck wird die Flüssigkeit in den Mikrofluidik-Kanal über die Einlassventile und die Pumpkammer bis zu den Auslassventilen gefördert. Die Einlassventile schließen mit 2 bar. Das Öffnen der Auslassventile erlaubt den Eintritt der Fluoresceinlösung in die jeweils zugeordnete Reaktionskammer. Durch Schließen der Pumpkammer mit 2,5 bar wird die Flüssigkeit in die entsprechende Reaktionskammer gefördert. Danach wir auch das Auslassventil mit 1,5 bar Druck pneumatisch geschlossen. Dieser Pumpvorgang wird stetig bei allen 32 Reaktionskammern wiederholt, so dass ein Fluss von 5 µL/h pro Reaktionskammer entsteht.

Über eine Zeit von ca. 20 h wird die Änderung des Fluoreszenzsignals aller 32 Reaktionskammern der Mikrotiterplatte aufgenommen. Nach Abschluss der Messung werden der Mittelwert der Änderung des Fluoreszenzsignals aller 32 Messwerte und die dazugehörige Standardabweichung sowie die relative Standardabweichung bestimmt. Sollten alle Mikrofluidikpumpen im Chip auf gleiche Weise angesteuert worden sein, erwartet man eine identische Flussrate in alle 32 Reaktionskammern und entsprechend eine Standardabweichung von Null. Höhere Standardabweichungen sind ein Indikator für Unterschiede zwischen den Pumpen oder deren Ansteuerung, die eine Variationen der Flussrate zur Folge haben.

Der Versuch wurde mehrfach sowohl mit Mikrofluidikchips durchgeführt, bei denen die Membranfolie mittels Thermofusion aufgetragen ist, als auch mit Mikrofluidik-Chips, bei denen die Membranfolie via Laserschweißen mit dem Polymergrundkörper verbunden wurde. Die Ergebnisse zeigen für die Mikrofluidikchips, die durch Laserschweißen gefertigt wurden, gegenüber den Mikrofluidikchips, die durch Thermofusionsbonding gefertigt wurden, eine deutliche Erhöhung der Präzision des Pumpvorgangs, bzw. eine deutliche Reduzierung der Standardabweichung der Steigung des Fluoreszenzsignals. Die relative Standardabweichung der Änderung des Fluoreszenzsignals über der Zeit betrug im Fall der durch Thermofusionsbonding produzierten Chips im Mittel 12 %; Bei lasergeschweißten Chips betrug sie im Mittel weniger als 7 %.

Die vorgenannten sowie beanspruchten und in den Ausführungsbeispielen beschriebenen erfindungsgemäß zu verwendenden Bauteile unterliegen in ihrer Größe, Form, Gestaltung, Materialauswahl und technischen Konzeptionen keinen besonderen Ausnahmebedingungen, so dass die in dem Anwendungsgebiet bekannten Auswahlkriterien uneingeschränkt Anwendung finden können.

## Patentansprüche

1. Verfahren zur Erhöhung der Dosierpräzision von mikrofluidischen Pumpen 1, 2, 3 oder Ventilen, die eine flexible Membran (4) und einen Ventilkörper (8) mit mindestens einem Ventiltrog (5, 6, 7) aufweisen, wobei die flexible Membran (4) am Ventilkörper (8) befestigt wird, um den Ventiltrog (5, 6, 7) abzudecken, wobei die dem Ventiltrog (5, 6, 7) zugewandte Oberfläche (9) der Membran (4) mit einem Laserstrahl erwärmt wird ***dadurch gekennzeichnet, dass*** die dem Ventiltrog (5, 6, 7) zugewandte Oberfläche der Membran (4) durch eine auf die Membran (4) auftreffende Strahlung erwärmt wird, indem die Strahlung durch die Membran (4) auf die Oberfläche (9) trifft und die Strahlung durch den Ventilkörper (8) auf die Oberfläche (9) trifft, wobei die Ungenauigkeit der Führung des Laserstrahls in x-y-Richtung weniger als 1 Millimeter beträgt, wobei Polymere des Ventilkörpers durch einen fokussierten Laserstrahl über ihren Erweichungspunkt hinaus an exakt definierten Stellen erwärmt werden, ohne dass zusätzliche Absorber im Kunststoff oder auf der Kunststoffoberfläche verwendet werden, sodass der Schweißvorgang nicht flächig erfolgt, sondern auf einer Linie.

2. Verfahren nach einem der vorhergehenden Ansprüche, ***dadurch gekennzeichnet, dass*** die Membran (4) mit dem Ventilkörper (8) mittels des Laserstrahls verschweißt wird.

3. Verfahren nach einem der vorhergehenden Ansprüche, ***dadurch gekennzeichnet, dass*** die Oberfläche (9) des Ventilkörpers (8) vor der Befestigung poliert wird.

4. Verfahren nach einem der vorhergehenden Ansprüche, ***dadurch gekennzeichnet, dass*** die Oberfläche (9) des Ventilkörpers (8) vor der Befestigung um den Ventiltrog (5, 6, 7) einen Mittenrauwert (Ra-Wert) von unter 100 nm, bevorzugt weniger als 50 nm und ganz bevorzugt weniger als 20 nm aufweist.

5. Verfahren nach einem der vorhergehenden Ansprüche , ***dadurch gekennzeichnet, dass*** die Ungenauigkeit der Führung des Laserstrahls in x-y-Richtung mehr als 0,05 Mikrometer und weniger als 1 Millimeter, bevorzugt weniger als 50 Mikrometer und ganz bevorzugt weniger als 5 Mikrometer beträgt.

6. Verfahren nach einem der vorhergehenden Ansprüche, ***dadurch gekennzeichnet, dass*** für die Membran (4) und den Ventiltrog (5, 6, 7) verschiedene Polymere mit verschiedenen Transmissionsbereichen verwendet werden, die mit UV-Laser, sichtbaren Laserstrahlen oder mit Infrarot-Laser verschweißt werden.

7. Verfahren nach einem der vorhergehenden Ansprüche, ***dadurch gekennzeichnet, dass*** der Wellenlängenbereich des Laserstrahls zwischen 0,1 und 1000 Mikrometer, bevorzugt zwischen 0,4 und 50 Mikrometer und ganz bevorzugt zwischen 0,78 und 3 Mikrometer liegt.

8. Verfahren nach einem der vorhergehenden Ansprüche, ***dadurch gekennzeichnet, dass*** die Befestigung auf einer Linie erfolgt, deren Breite 20 Mikrometer bis 3 Millimeter, bevorzugt zwischen 30 und 500 Mikrometer und besonders bevorzugt zwischen 50 und 300 Mikrometer liegt.

9. Schweißvorrichtung eingerichtet zur Durchführung eines Verfahrens nach einem der vorhergehenden Ansprüche, mit einem Laser und einer Einrichtung zum computergesteuerten Bewegen des Lasers und mit einer Digitalkamera zum automatischen Erfassen von Start- und Endkoordinaten der Bewegung, um die Membran (4) im Umkreis aller Ventiltröge (5, 6, 7) zu schweißen.

10. Spannvorrichtung eingerichtet zur Durchführung eines Verfahrens nach einem der vorhergehenden Ansprüche, um die Deckelfolie/Membran (4) faltenfrei, mit der korrekten Vordehnung und bündig auf der Ventiloberseite so zu spannen, dass der Druck, den die Folie auf die Ventiloberseite ausübt, überall gleich ist, um so eine gleichförmige Schweißnaht zu erzielen, wobei die Spannvorrichtung eine Glasplatte aufweist, um durch einen Druck zwischen Glasplatte und Ventilkörper einen Materialfluss zwischen Membrane und Ventilkörper zu induzieren, der nach dem Erstarren der geschmolzenen Polymere zu einer schmalen, exakt positionierten und mechanisch haltbaren Schweißnaht führt.

## Claims

1. A method for increasing the dosing precision of microfluidic pumps (1, 2, 3) or valves, which have a flexible diaphragm (4) and a valve body (8) with at least one valve trough (5, 6, 7), wherein the flexible diaphragm (4) is attached to the valve body (8) to cover the valve trough (5, 6, 7), wherein the surface (9) of the diaphragm (4) facing the valve trough (5, 6, 7) is heated with a laser beam, ***characterized in that*** the surface of the diaphragm (4) facing the valve trough (5, 6, 7) is heated by radiation impinging on the diaphragm (4) **in that** the radiation impinges on the surface (9) through the diaphragm (4) and the radiation impinges on the surface (9) through the valve body (8), wherein the inaccuracy of the guidance of the laser beam in the x-y direction is less than 1 millimeter, wherein polymers of the valve body are heated by a focused laser beam beyond their softening point at precisely defined locations without using additional absorbers in the plastic or on the plastic surface, so that the welding process does not take place over a large surface but on a line.

2. The method according to any one of the preceding claims, ***characterized in that*** the diaphragm (4) is welded to the valve body (8) by means of the laser beam.

3. The method according to any one of the preceding claims, ***characterized in that*** the surface (9) of the valve body (8) is polished before the attachment.

4. The method according to any one of the preceding claims, ***characterized in that*** prior to the attachment around the valve trough (5, 6, 7), the surface (9) of the valve body (8) has a mean roughness value (Ra value) of below 100 nm, preferably less than 50 nm and more preferably less than 20 nm.

5. The method according to any one of the preceding claims, ***characterized in that*** the inaccuracy of the guidance of the laser beam in the x-y direction is more than 0.05 micrometers and less than 1 millimeter, preferably less than 50 micrometers and more preferably less than 5 micrometers.

6. The method according to any one of the preceding claims, ***characterized in that*** different polymers with different transmission ranges are used for the diaphragm (4) and the valve trough (5, 6, 7) and are welded with UV laser, visible laser beams or with infrared laser.

7. The method according to any one of the preceding claims, ***characterized in that*** the wavelength range of the laser beam is between 0.1 and 1000 micrometers, preferably between 0.4 and 50 micrometers and more preferably between 0.78 and 3 micrometers.

8. The method according to any one of the preceding claims, ***characterized in that*** the attaching is carried out on a line whose width is between 20 micrometers and 3 millimeters, preferably between 30 and 500 micrometers and particularly preferably between 50 and 300 micrometers.

9. A welding apparatus, configured to carry out a method according to any one of the preceding claims, comprising a laser and a device for computer-controlled movement of the laser and comprising a digital camera for automatically recording start and end coordinates of the movement in order to weld the diaphragm (4) in the vicinity of all the valve troughs (5, 6, 7).

10. A tensioning apparatus, configured to carry out a method according to any one of the preceding claims, to tension the cover film/diaphragm (4) without wrinkles, with the correct pre-stretch and flush with the valve upper side so that the pressure exerted by the film on the valve upper side is the same everywhere so as to achieve a uniform weld, wherein the tensioning apparatus comprises a glass plate in order to induce a material flow between the diaphragm and the valve body by means of a pressure between the glass plate and the valve body, which material flow, after solidification of the molten polymers, results in a narrow, precisely positioned and mechanically durable weld seam.

## Revendications

1. Procédé pour augmenter la précision de dosage des pompes ou soupapes microfluidiques (1, 2, 3), qui comportent une membrane souple (4) et un corps de soupape (8) avec au moins un auget de soupape (5, 6, 7), sachant que la membrane souple (4) est fixée au corps de soupape (8) pour couvrir l'auget de soupape (5, 6, 7), sachant que la surface (9) de la membrane (4) tournée vers l'auget de soupape (5, 6, 7) est chauffée avec un faisceau de laser, **caractérisé en ce que** la surface de la membrane (4) tournée vers l'auget de soupape (5, 6, 7) est chauffée par un faisceau incident sur la membrane (4), le faisceau frappant la surface (9) à travers la membrane (4) et le faisceau frappant la surface (9) à travers le corps de soupape (8), sachant que l'imprécision du guidage du faisceau de laser en direction x-y est moins de 1 millimètre, sachant que les polymères du corps de soupape sont chauffés par un faisceau de laser focalisé au-delà de leur point de ramollissement à des endroits exactement définis sans que des absorbeurs supplémentaires ne soient utilisés dans la matière plastique ou sur la surface de matière plastique de telle sorte que l'opération de soudure n'a pas lieu en surface, mais sur une ligne.

2. Procédé selon la revendication précédente, **caractérisé en ce que** la membrane (4) est soudée au corps de soupape (8) au moyen du faisceau de laser.

3. Procédé selon l'une quelconque des revendications précédentes, **caractérisé en ce que** la surface (9) du corps de soupape (8) est polie avant la fixation.

4. Procédé selon l'une quelconque des revendications à précédentes, **caractérisé en ce que** la surface (9) du corps de soupape (8) comporte avant la fixation autour de l'auget de soupape (5, 6, 7) une valeur de rugosité moyenne (Val.Rug) inférieure à 100 mm, de préférence de moins de 50 mm et de façon entièrement préférée de moins de 20 mm.

5. Procédé selon l'une quelconque des revendications précédentes, **caractérisé en ce que** l'imprécision du guidage du faisceau de laser en direction x-y est de plus de 0,05 micromètres et de moins de 1 millimètre, de préférence de moins de 50 micromètres et de façon entièrement préférée de moins de 5 micromètres.

6. Procédé selon l'une quelconque des revendications précédentes, **caractérisé en ce que** pour la membrane (4) et l'auget de soupape (5, 6, 7) différents polymères avec différentes zones de transmission sont utilisés, qui sont soudés avec un laser à UV, des faisceaux de laser visibles ou avec un laser à infrarouge.

7. Procédé selon l'une quelconque des revendications précédentes, **caractérisé en ce que** la gamme de longueurs d'ondes du faisceau de laser se situe entre 0,1 mm et 1 000 micromètres, de préférence entre 0,4 et 50 micromètres et de façon entièrement préférée entre 0,78 et 3 micromètres.

8. Procédé selon l'une quelconque des revendications précédentes, **caractérisé en ce que** la fixation a lieu sur une ligne dont la largeur est de 20 micromètres à 3 millimètres, de préférence entre 30 et 500 micromètres et de façon particulièrement préférée entre 50 et 300 micromètres.

9. Dispositif de soudure agencé pour exécuter un procédé selon l'une quelconque des revendications précédentes, avec un laser et un système pour le déplacement informatisé du laser et avec une caméra numérique pour la saisie automatique de coordonnées initiales et finales du déplacement pour souder la membrane (4) sur le pourtour de tous les augets de soupape (5, 6, 7).

10. Dispositif de serrage agencé pour exécuter un procédé selon l'une quelconque des revendications précédentes pour tendre la feuille de couverture/membrane (4) sans pli, avec le préétirage correct et en alignement sur la face supérieure de soupape de telle sorte que la pression qu'exerce la feuille sur la face supérieure de soupape, soit partout identique pour obtenir ainsi un cordon de soudure uniforme, sachant que le dispositif de serrage comporte une plaque de verre pour initier un flux de matière entre la membrane et le corps de soupape par une pression entre la plaque de verre et le corps de soupape, qui conduit à un cordon de soudure étroit, exactement positionné et mécaniquement résistant après la solidification des polymères fondus.
